Europäisches Patentamt

European Patent Office

Office européen des brevets

(19)

(11) Numéro de publication: **0 123 634**

**A1**

(12) **DEMANDE DE BREVET EUROPEEN**

(21) Numéro de dépôt: 84420056.8

(22) Date de dépôt: 22.03.84

(51) Int. Cl.³: **C 01 G 25/04**

(30) Priorité: 24.03.83 FR 8305171

(43) Date de publication de la demande:
31.10.84 Bulletin 84/44

(84) Etats contractants désignés:
DE GB IT SE

(71) Demandeur: CEZUS Compagnie Européenne du Zirconium
10. rue Général Foy
F-75008 Paris(FR)

(72) Inventeur: Brun, Pierre
8 bd. Maréchal Leclerc
F-38000 Grenoble(FR)

(72) Inventeur: Guerin, Jean
88, rue Maurin des Maures
F-83600 Frejus(FR)

(74) Mandataire: Séraphin, Léon et al,
PECHINEY 28, rue de Bonnel
F-69433 Lyon Cedex 3(FR)

(54) Procédé de séparation de tétrachlorure de zirconium d'avec du tétrachlorure d'hafnium par distillation extractive permettant d'éliminer l'aluminium apporté par le solvant.

(57) L'invention concerne un procédé et un dispositif continu de préparation par distillation extractive de tétrachlorure de zirconium de pureté nucléaire d'avec du tétrachlorure de hafnium, et plus précisément l'élimination de certaines impuretés.

Le dispositif utilise comme solvant sélectif un chloroaluminate alcalin et est constitué par une colonne de séparation (17) à l'intérieur de laquelle sont disposés plusieurs plateaux (18, 19, 20) supportant chacun une couche d'un mélange de sels fondus, la colonne (17) étant pourvue à sa base d'un orifice (30) d'introduction d'un courant de $ZrCl_4$ gazeux appauvri ou enrichi en $HfCl_4$, chaque plateau étant équipé de moyens de barbotage de ce $ZrCl_4$ gazeux à travers les couches de sel fondu (28, 28, 29) en direction de la base de la colonne et un moyen d'introduction (32) permettant d'introduire en quantités déterminées un chlorure alcalin tandis qu'un orifice de sortie (31) du $ZrCl_4$ purifié en Al est relié à des moyens de condensation et de stockage.

Le procédé s'applique à la préparation d'éponge de zirconium de qualité dite nucléaire.

FIG.2

-1-

PROCEDE DE SEPARATION DE $ZrCl_4$ D'AVEC $HfCl_4$ PAR DISTILLATION
EXTRACTIVE PERMETTANT D'ELIMINER L'ALUMINIUM APPORTE PAR LE
SOLVANT

Le procédé qui fait l'objet de l'invention concerne la préparation
par distillation extractive de tétrachlorure de zirconium de pureté
nucléaire et de tétrachlorure de hafnium, à partir d'un tétrachlorure de zirconium impur généralement obtenu par carbochloration du
zircon.

De façon plus précise, le procédé suivant l'invention concerne l'élimination de certaines impuretés provenant en particulier du solvant
qui sont entraînées avec les vapeurs de $ZrCl_4$ appauvries en $HfCl_4$ et
aussi avec les vapeurs de $ZrCl_4$ enrichies en $HfCl_4$ au cours de l'opération de distillation extractive du tétrachlorure de zirconium
impur.

Un procédé de séparation par distillation extractive de $HfCl_4$ contenu dans le $ZrCl_4$ brut, tel que obtenu par chloration d'un minerai de
zirconium,est décrit dans le brevet FR. 2 250 707. Dans ce procédé,
on effectue de façon continue dans une colonne de distillation la séparation des tétrachlorures de zirconium et de hafnium par absorption sélective de leurs vapeurs au moyen d'un solvant fondu circulant à contre-courant. On utilise comme solvant un chloroaluminate
ou un chloroferrate alcalin, ou un mélange de ces deux sels.

Dans la pratique, il est apparu généralement préférable d'utiliser
comme solvant les chloroaluminates, car ceux-ci sont plus stables que
les chloroferrates, et en particulier le chloroaluminate de potassium.

Suivant une caractéristique essentielle du procédé, et dans le but
de donner à la colonne une efficacité suffisante, le chloroaluminate
alcalin a un rapport molaire chlorure d'aluminium/chlorure alcalin
compris entre 0,95 et 1,30 et, de préférence, comprise entre 1,04
et 1,10.

L'expérience a montré qu'un tel solvant, qui permet une élimination aussi poussée qu'il est nécessaire, du chlorure de hafnium initialement contenu dans le chlorure de zirconium, a par contre l'inconvénient de présenter une tension de vapeur non négligeable du chlorure d'aluminium lorsque sa température est supérieure à 300°C. Une telle température est précisément celle du solvant enrichi en $ZrCl_4$ déhafnié, qui est recueilli à la base de la colonne afin d'extraire une partie de ce $ZrCl_4$ par stripping avec un gaz neutre tel que de l'azote. Dans ces conditions, on constate que le $ZrCl_4$ sublimé contient des quantités de $AlCl_3$ bien supérieures à celles généralement acceptées pour la fabrication du zirconium qui sera utilisé pour des applications nucléaires.

Différents moyens peuvent être utilisés pour abaisser la teneur en Al du $ZrCl_4$ appauvri ou enrichi en $HfCl_4$. On peut, en particulier, effectuer une condensation fractionnée qui pourra, éventuellement, être suivie d'un nouveau cycle comportant une sublimation puis, à nouveau, une condensation fractionnée. Il est possible ainsi, dans le cas du $ZrCl_4$ appauvri en $HfCl_4$, de réduire la teneur en $AlCl_3$ du $ZrCl_4$, qui est initialement de l'ordre de 0,04 à 4 % en masse, jusqu'à une teneur finale qui doit le plus souvent être inférieure à 100 ppm d'Al rapporté à Zr. Mais, une telle façon d'opérer est longue et coûteuse, et d'un rendement médiocre.

On peut aussi, comme cela est décrit par SPINK (Fused-Salt Scrubbing of Zirconium Tetrachloride - Transactions of the Metallurgical Society of AIME, volume 224, Octobre 1962, pp. 965-970) faire barboter des vapeurs de $ZrCl_4$ dans un récipient contenant une solution saturée de $ZrCl_4$ dans un ou plusieurs halogénures alcalins ou alcalino-terreux. On utilise par exemple un mélange binaire $ZrCl_4NaCl$ qui présente un eutectique à 314°C pour la composition $NaZr_2Cl_9$ ou encore un mélange ternaire $ZrCl_4NaClKCl$. L'auteur observe que, au fur et à mesure du passage des vapeurs de $ZrCl_4$ à purifier, il se forme dans le fond du récipient une couche de sels de couleur plus sombre, riche en insoluble dans l'eau, qu'il faut éliminer par soustirage par exemple.

Les essais montrent par ailleurs qu'il est difficile d'abaisser la teneur en $AlCl_3$ au cours de ce barbotage à un niveau inférieur à 100 ppm et, de préférence, inférieur à 50 ppm par rapport à Zr.

On constate en particulier que la tension de vapeur en $AlCl_3$ du mélange de sels augmente avec l'enrichissement en $AlCl_3$ et qu'il faut donc fréquemment remplacer le mélange usé par un mélange neuf si on veut conserver un degré de purification suffisant.

Un tel mode opératoire entraîne une consommation relativement importante de sels et, en particulier, de $ZrCl_4$, sans permettre d'obtenir en continu un taux de purification suffisant.

Il a été proposé par ailleurs dans le brevet EP. 45 270, un procédé discontinu permettant de traiter un tétrachlorure de zirconium contenant du chlorure d'aluminium à une teneur par exemple de 0,1 à 0,2 % en poids. Ce procédé comporte une première étape dans laquelle on mélange un lot de $ZrCl_4$ avec environ 10 % de NaCl. Après fusion du mélange, une distillation permet d'abaisser la teneur en Al du $ZrCl_4$ vers 0,1 à 0,02 %.

Dans une deuxième étape, il est possible d'abaisser encore la teneur en Al de ces vapeurs de $ZrCl_4$ jusqu'à un niveau de l'ordre de 0,01 % ou inférieur en les faisant passer à travers un bain fondu NaCl,KCl. D'autres halogénures alcalins peuvent être utilisés pour ces deux traitements successifs. Un tel procédé présente l'inconvénient d'une relative complexité. Par ailleurs, une quantité d'environ 10 % du $ZrCl_4$ traité est retenue sous forme d'un mélange de sels fondus NaCl, $ZrCl_4$. Enfin, des essais montrent que la fixation de $AlCl_3$ par ces sels fondus est limitée par la tension de vapeur du $AlCl_3$ qui est déjà passé en solution dans ces sels. Comme cela a été indiqué plus haut, cette tension de vapeur s'accroît au fur et à mesure de l'augmentation de la concentration en $AlCl_3$ dans le mélange de sels fondus. Il en résulte que l'efficacité d'un tel procédé décroît d'autant plus vite que les quantités de $AlCl_3$ à éliminer deviennent importantes, ce qui est le cas lorsqu'on utilise le procédé de distillation extractive qui fait appel au chloroaluminate alcalin comme solvant.

On a recherché la possibilité de mettre un point au procédé continu de séparation par distillation extractive de $HfCl_4$ d'avec $ZrCl_4$ par absorption sélective de leurs vapeurs au moyen d'un chloroaluminate circulant à contre-courant, tel que celui décrit dans le brevet FR. 2 250 707, dans lequel on obtiendrait directement un $ZrCl_4$ appauvri en $HfCl_4$ dont la teneur en $AlCl_3$ serait abaissée à un très bas niveau grâce à un traitement particulier constituant une simple étape de la distillation extractive et ne modifiant pas de façon importante les conditions opératoires.

On a recherché de même la possibilité d'obtenir dans un tel procédé de distillation extractive un $ZrCl_4$ enrichi en $HfCl_4$ dont la teneur en $AlCl_3$ serait également abaissée à un très bas niveau dans des conditions semblables.

De façon plus précise, on a recherché, dans le cadre de ce procédé de distillation extractive, la possibilité de traiter en continu le $ZrCl_4$ appauvri en $HfCl_4$ extrait du solvant sélectif, qui contient 0,04 à 4 % en masse de $AlCl_3$, de façon à abaisser sa teneur en Al jusqu'à un niveau inférieur à 100 ppm et, de préférence, inférieur à 50 ppm calculé par rapport à Zr.

On a également recherché la possibilité d'abaisser en continu la teneur en Al du $ZrCl_4$ enrichi en $HfCl_4$ extrait du solvant sélectif en tête de colonne, dont la teneur en $HfCl_4$ peut varier dans de très larges limites suivant les conditions opératoires et suivant aussi la teneur en $HfCl_4$ du $ZrCl_4$ impur de départ.

Le procédé continu de séparation par distillation extractive suivant l'invention, dans lequel on utilise comme solvant un chloroaluminate alcalin, consiste à mettre en contact un courant gazeux contenant le $ZrCl_4$ appauvri en $HfCl_4$ ou le $ZrCl_4$ enrichi en $HfCl_4$, contaminé par du chlorure d'aluminium provenant de la colonne de

0123634

-5-

distillation,avec un sel fondu, constitué d'un mélange de $ZrCl_4$ et/ ou $HfCl_4$ avec un chlorure alcalin,qui est le même que celui utilisé dans le solvant, ce sel fondu circulant à contre-courant par rapport au courant gazeux. De préférence, le courant gazeux est entraîné par un gaz neutre.

La température du mélange de sels est ajustée de façon qu'il soit maintenu à l'état liquide et que l'évaporation de $ZrCl_4$ ne conduise pas à une trop forte teneur en chlorure alcalin.

La purification à contre-courant des vapeurs de $ZrCl_4$ appauvri en $HfCl_4$ ou de $ZrCl_4$ enrichi en $HfCl_4$ est effectuée de préférence dans une colonne verticale dans laquelle on fait circuler de bas en haut les vapeurs à purifier, éventuellement entraînées par un gaz neutre, à travers le mélange des sels fondus, qui s'écoule de haut en bas.

Il est ainsi possible d'obtenir à partir d'un $ZrCl_4$ contenant environ 0,04 à 4 % en masse d'$AlCl_3$ un $ZrCl_4$ purifié dont la teneur en Al par rapport à Zr est facilement abaissée au-dessous de 50 ppm.

Les exemples et les figures ci-après décrivent de façon non limitative le procédé et le dispositif suivant l'invention.

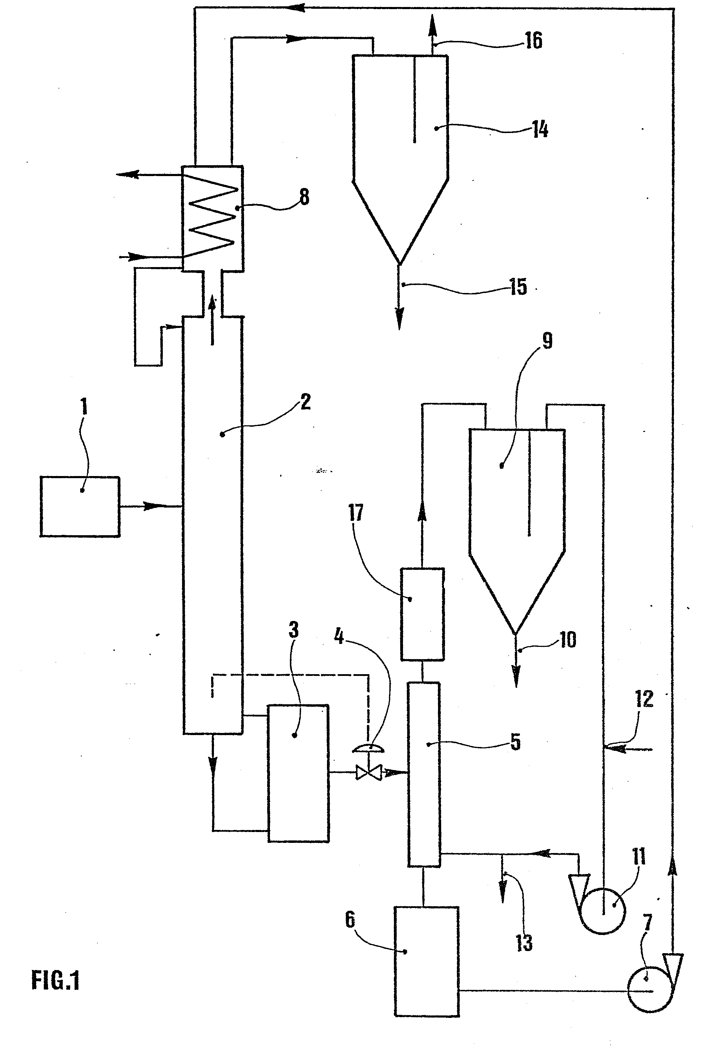

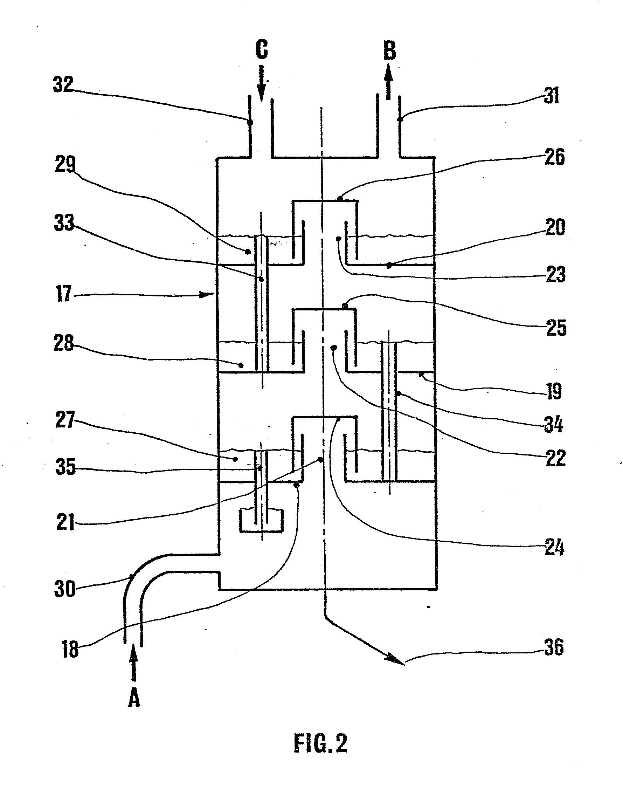

La figure 1 représente de façon schématique une installation de séparation de $HfCl_4$ d'avec $ZrCl_4$ par distillation extractive, comportant un dispositif d'élimination de l'aluminium suivant l'invention. La figure 2 représente en élévation et en coupe la structure du dispositif d'élimination de l'aluminium contenu dans le $ZrCl_4$ appauvri en $HfCl_4$ suivant l'invention, qui est intégré dans l'installation représentée figure 1.

On voit figure 1 une installation de séparation en continu des tétrachlorures de zirconium et de hafnium par distillation extractive suivant le procédé décrit dans le FR. 2 250 707, à laquelle on a incorporé le dispositif suivant l'invention.

Cette installation comporte un moyen (1) d'alimentation d'une colonne de distillatioh (2) en vapeurs de tétrachlorure de zirconium brut contenant du tétrachlorure de hafnium. Une pompe (7) assure la circulation du solvant d'extraction de haut en bas dans la colonne de distillation à contre-courant des vapeurs de tétrachlorures de zirconium et de hafnium. Ce solvant est un chloroaluminate alcalin fondu dont le rapport molaire chlorure d'aluminium/chlorure alcalin est compris entre 0,95 et 1,30 et de préférence entre 1,04 et 1,10. Ce solvant parcourt en circuit fermé l'absorbeur condenseur (8), la colonne (2), le bouilleur (3), la colonne de stripping (5) et le réservoir (6) d'où il est renvoyé à nouveau par la pompe (7) en direction de l'absorbeur condenseur (8).

Les vapeurs de tétrachlorure de zirconium, enrichies en tétrachlorure de hafnium plus volatil, au cours de leur ascension dans la colonne 2 par échange avec le solvant circulant à contre-courant, sortent de la colonne (2) à sa partie supérieure, puis traversent l'absorbeur condenseur (8) dans lequel elles saturent le solvant recyclé. Une fraction de ces vapeurs, non retenue par le solvant, se dégage de l'absorbeur condenseur(8) et vient se condenser dans le condenseur (14) qui est relié à l'atmosphère par une tubulure d'évent (16), et comporte un moyen de soutirage (15) qui permet d'extraire le condensat de $ZrCl_4$ enrichi en $HfCl_4$.

A la base de la colonne (2) le bouilleur (3), dont la température est réglée vers 500°C, reçoit la solution de $ZrCl_4$ dans le chloroaluminate alcalin qui s'est appauvrie en $HfCl_4$ au cours de sa descente à travers la colonne (2). Cette solution passe du bouilleur (3) dans la colonne de stripping (5) à travers une vanne de contrôle de débit (4) qui est télécommandée de façon à maintenir un niveau de solvant sensiblement constant à la base de la colonne 2. Dans la colonne de stripping (5), le $ZrCl_4$ ainsi appauvri en $HfCl_4$ est extrait du solvant par passage dans la colonne de stripping (5) au moyen d'un courant d'un gaz neutre, tel que de l'azote, qui circule de bas en haut dans cette colonne, à contre-courant du solvant, et entraîne à la partie supérieure les vapeurs de $ZrCl_4$ qui sont ainsi extraites du

0123634

-7-

solvant. A ce stade, les vapeurs de $ZrCl_4$ sont appauvries en $HfCl_4$ mais, du fait de la tension de vapeur de $AlCl_3$ dans le solvant fondu, contiennent de 0,04 à 4 % en masse de $AlCl_3$, ce qui les rend inutilisables sans séparation ultérieure pour la fabrication du zirconium métal pour applications nucléaires. Afin d'abaisser cette teneur en $AlCl_3$ au-dessous de la teneur limite exigée pour de telles applications, les vapeurs de $ZrCl_4$ sont entraînées par le courant de gaz neutre à travers le dispositif d'élimination de l'aluminium (17) qui est décrit plus loin de façon détaillée. A la sortie de ce dispositif (17), les vapeurs de $ZrCl_4$ appauvries en $AlCl_3$ sont entraînées dans le condenseur (9). Le $ZrCl_4$ déhafnié et purifié est soutiré en (10). Le gaz neutre est entraîné en circuit fermé par le surpresseur (11), les pertes étant compensées par un moyen d'introduction de gaz neutre en (12) et les surpressions éventuelles étant limitées par un dispositif de soupape en (13). On peut utiliser comme gaz neutre de l'azote ou d'autres gaz non réactifs vis-à-vis des composés ou des matériaux mis en oeuvre. On peut aussi, au lieu de faire circuler un gaz neutre, favoriser le dégagement des vapeurs de $ZrCl_4$ dans la colonne (5) et leur passage à travers le dispositif d'élimination de l'aluminium (17) en mettant sous pression réduite le condenseur (9) au moyen d'une pompe à vide.

La figure 2 représente la structure du dispositif d'élimination de l'aluminium (17). Ce dispositif (17) est une colonne réalisée en un matériau résistant à la corrosion par les chlorures fondus. On utilise par exemple un alliage à base Ni.

Cette colonne comporte trois plateaux (18, 19, 20) pourvus chacun d'au moins une cheminée (21, 22, 23) et une cloche de diffusion (24, 25, 26), qui fait joint hydraulique et oblige le mélange gazeux qui se déplace de bas en haut, à barboter dans les couches de sels fondus (27, 28, 29) qui recouvrent les plateaux. L'ensemble de la colonne est maintenu à une température d'environ 300 à 340°C par des moyens de régulation de température bien connus de l'homme de l'art et non représentés.

Le $ZrCl_4$ appauvri en $HfCl_4$ et contenant 0,4 à 4 % de $AlCl_3$, le plus souvent entraîné par un gaz neutre tel que l'azote, est introduit à la partie inférieure de la colonne par la canalisation (30) suivant la flèche A à une température de l'ordre de 300 à 450°C. Ce mélange gazeux provient, comme le montre la figure 1, de la colonne de stripping (5). Il traverse successivement les plateaux (18, 19, 20) et barbote à travers chacune des couches (27, 28, 29) du mélange de sels fondus qui les recouvre. A la partie supérieure de la colonne, le mélange gazeux se dégage suivant la flèche B à travers la canalisation (31) qui est reliée au condenseur (9) dans lequel le $ZrCl_4$ purifié en Al se condense. On comprend que le chlorure d'aluminium, qui est retenu par le mélange de sels fondus au niveau de chaque plateau, modifie peu à peu la composition de ce mélange avec, pour conséquence, l'apparition d'une tension de vapeur non négligeable en $AlCl_3$ qui fera obstacle à l'élimination des dernières traces de $AlCl_3$ contenues dans le $ZrCl_4$. Pour limiter cet inconvénient à un niveau acceptable, un moyen d'introduction continue ou cadencée fait pénétrer suivant la flèche C, en quantités bien déterminées, un chlorure alcalin à travers l'orifice (32) dans la colonne au niveau du plateau supérieur (20). Cette introduction est réalisée avec la précision voulue de façon non décrite mais connue. Ce chlorure alcalin est de préférence introduit à l'état solide et se dissout dans le mélange de sels fondus (29). Ce mélange contient principalement le chlorure alcalin et du $ZrCl_4$, et son point de fusion varie suivant la nature et la teneur du chlorure alcalin.

Lorsqu'on utilise, comme solvant pour la distillation extractive, le chloroaluminate de potassium, on introduit en (32) du chlorure de potassium et on cherche à obtenir, de préférence, un mélange ayant approximativement la composition $KCl, 2ZrCl_4$, dont le point de fusion est inférieur à 300°C.

On ajuste la température de façon que la vitesse d'évaporation de $ZrCl_4$ au niveau de ce plateau ne soit pas plus grande que la vitesse de dissolution du $ZrCl_4$ à purifier. Comme celui-ci cède les dernières quantités de $AlCl_3$ qu'il contient au mélange de sels (29) qui se trouve sur le plateau (20), on comprend qu'il est nécessaire de ne pas laisser la concentration en $AlCl_3$ dépasser une certaine limite dans ce mélange.

En effet, la sublimation partielle de cet $AlCl_3$ empêcherait alors d'abaisser la teneur en $AlCl_3$ du $ZrCl_4$ extrait en (31) au niveau voulu. On limite précisément cette teneur en permettant un reflux du mélange de sels fondus de plateau en plateau, grâce à l'addition de KCl à la partie supérieure et grâce à un réglage de température de colonne qui permet de ne pas sublimer plus de $ZrCl_4$ qu'il ne s'en dissout. L'accroissement parallèle des quantités de $ZrCl_4$ et KCl au niveau du plateau (20) provoque un écoulement de l'excès de sel fondu par la canalisation (33) en direction du plateau (19) puis, par la canalisation (34), en direction du plateau (18), et enfin. l'excès de sel contenu dans le plateau (18) retourne, par la canalisation (35), au pied de la colonne d'où il s'écoule par la canalisation figurée en (36) en direction de la colonne d'épuisement (5). Ce sel est un mélange KCl, $ZrCl_4$, $AlCl_3$, dont les proportions dépendent principalement de quatre facteurs :

1°/ le débit de $ZrCl_4$ gazeux qui pénètre dans la colonne à la partie inférieure et la teneur en $AlCl_3$ de ce $ZrCl_4$ qui est pratiquement comprise entre 0,04 et 4 %,

2°/ le débit de gaz neutre qui entraîne le $ZrCl_4$ à travers la colonne,

3°/ les quantités de KCl introduites à la partie supérieure,

4°/ les températures des mélanges de sels fondus (27, 28, 29) qui, en combinaison avec le débit d'introduction de KCl, déterminent le taux de reflux et la composition du mélange de sels fondus qui s'écoule à contre-courant du flux gazeux en s'enrichissant en $AlCl_3$.

Ces différents facteurs sont ajustés par l'homme de l'art de façon à limiter la teneur en $AlCl_3$ du mélange KCl, $2ZrCl_4$ au niveau du plateau supérieur. C'est cette teneur, en effet, ainsi que la température du mélange de sels fondus, qui déterminent la teneur limite

en $AlCl_3$ du $ZrCl_4$ qui sort de la colonne

La température du mélange de sels (29) contenu dans le plateau supérieur (20) est ajustée pour obtenir une composition voisine de KCl, $2 ZrCl_4$ ayant un point de fusion inférieur à 300°C. Ce point de fusion n'est que légèrement modifié par la présence de petites quantités de $AlCl_3$.

La teneur en $AlCl_3$ du mélange de sels, qui reflue à travers la colonne, s'accroît de plateau en plateau et, dans les conditions optimales, le rapport molaire $AlCl_3/KCl$ dans le mélange de sels qui retourne par la canalisation (30) à la colonne d'épuisement est de l'ordre de 0,5 à 1.

On voit que le procédé d'élimination de l'aluminium contenu dans le $ZrCl_4$, qui est ainsi mis en oeuvre, permet une élimination aussi poussée qu'on le désire du point de vue teneur en Al. Cette teneur résiduelle en Al dépend du nombre de plateaux de la colonne et du réglage des conditions opératoires. Si on désire abaisser encore la teneur résiduelle en $AlCl_3$, on peut avantageusement ajouter un ou plusieurs plateaux à la colonne. Dans la pratique, on utilise suivant les besoins une colonne comportant de 2 à 8 plateaux.

Un des avantages du procédé est qu'il ne nécessite pas, en général, de consommation notable d'énergie. En effet, le $ZrCl_4$, qui est extrait de la colonne d'épuisement par le courant de gaz neutre, est à une température de l'ordre de 300 à 450°C comme cela a été dit plus haut. Il suffit donc, de façon connue, de stabiliser la température de la colonne de façon que ses plateaux se trouvent à la température voulue pour que la dissolution du KCl ajouté à la partie supérieure se produise de façon satisfaisante et que la composition du mélange de sels (29) reste voisine de 1 KCl, $2ZrCl_4$.

Les exemples ci-après décrivent de façon non limitative des modes de réalisation du procédé de distillation extractive suivant l'invention au niveau du dispositif d'élimination de l'aluminium.

EXEMPLE 1 :

Dans un dispositif suivant l'invention d'élimination de l'aluminium constitué d'une colonne de quatre plateaux maintenue à 315-320°C, chaque plateau contenant environ 4 litres de sels fondus, on fait circuler de bas en haut un mélange gazeux provenant de la colonne de stripping d'une installation de distillation extractive telle que celle décrite plus haut, composé de 1,5 $Nm^3$/h d'azote et de 6,6 kg/h environ de chlorure de zirconium appauvri en $HfCl_4$, dont la teneur en Al rapportée à Zr est d'environ 6 400 ppm. On obtient en tête de colonne environ 6,300 kg/h de chlorure de zirconium, dont la teneur en Al rapportée à Zr a été abaissée à 30 ppm. On ajoute dans le plateau supérieur 80 à 100 g/h de KCl.

EXEMPLE 2 :

Dans un dispositif de même conception que celui de l'exemple 1, comportant une colonne de quatre plateaux maintenue à 315-325°C, et contenant environ 600 litres de sels fondus au total, provenant d'une installation de distillation extractive telle que celle décrite plus haut, on introduit un mélange gazeux contenant environ 550 kg/h de chlorure de zirconium appauvri en $HfCl_4$, dont le titre Al/Zr est d'environ 23 000 ppm. On obtient en tête de colonne environ 530 kg/h de $ZrCl_4$ épuré dont le titre Al/Zr est inférieur à 50 ppm. On ajoute dans le plateau supérieur environ 17 kg/h de KCl.

EXEMPLE 3 :

Dans un dispositif analogue à ceux des exemples 1 et 2, mais comportant une colonne de deux plateaux seulement, maintenue à 300-310°C et contenant environ 6 litres de sels fondus au total, on introduit 30 kg/h de vapeur de $HfCl_4$ provenant de l'absorbeur condenseur d'une installation de distillation extractive telle que celle décrite plus haut, dont le titre Al/Hf est d'environ 460 ppm. On obtient en tête de colonne environ 29,5 kg/h de $HfCl_4$, dont le titre Al/Hf est inférieur à 80 ppm. On ajoute dans le plateau supérieur environ 90 g/hr de KCl.

EXEMPLE 4 :

Dans un dispositif analogue à celui de l'exemple 3 et utilisé dans les mêmes conditions, mais comportant une colonne de cinq plateaux, maintenue à 300-315°C et contenant environ 25 litres de sels fondus au total, on introduit 25 kg/h environ de vapeurs de $HfCl_4$, dont le titre Al/Hf est voisin de 7 000 ppm. On obtient environ 23 kg/h de $HfCl_4$ titrant moins de 100 ppm Al/Hf.
On ajoute dans le plateau supérieur environ 500 g/h de KCl.

Dans le cas où on voudrait utiliser comme solvant, dans la distillation extractive de $ZrCl_4$ hafnié, un mélange de chlorures comportant, à la place de KCl, un autre chlorure alcalin tel que NaCl, ou un mélange KCl, NaCl, on pourrait effectuer la purification de $ZrCl_4$ en $AlCl_3$ par le même procédé, en remplaçant simplement dans le mélange de sels le chlorure de potassium par du chlorure de sodium ou un mélange KCl, NaCl. On introduirait alors dans la colonne de purification du NaCl ou un mélange KCl, NaCl par l'orifice (32). Les températures de fonctionnement de la colonne devraient alors être modifiées pour tenir compte des points de fusion des mélanges binaires NaCl, $ZrCl_4$ ou ternaires NaCl, KCl, $ZrCl_4$.

De nombreux autres modes de mise en oeuvre du procédé suivant l'invention peuvent être envisagés, en particulier en ce qui concerne les caractéristiques du dispositif suivant l'invention, sans sortir du domaine revendiqué.

REVENDICATIONS

1°/ - Procédé continu de séparation par distillation extractive de $ZrCl_4$ d'avec $HfCl_4$, dans lequel on utilise comme solvant sélectif un chloroaluminate alcalin, caractérisé en ce que, dans le but de séparer l'aluminium, contenu dans le $ZrCl_4$ appauvri en $HfCl_4$ ou dans le $ZrCl_4$ enrichi en $HfCl_4$, on met en contact un courant gazeux contenant ce $ZrCl_4$ appauvri ou enrichi en $HfCl_4$, provenant de la colonne de distillation, avec un mélange de sels fondus, contenant $ZrCl_4$ et/ou $HfCl_4$ et au moins un chlorure alcalin qui est le même que celui utilisé dans le solvant, ce mélange de sels circulant à contrecourant par rapport au courant gazeux.

2°/ - Procédé suivant revendication 1, caractérisé en ce que le chlorure alcalin est du chlorure de potassium.

3°/ - Procédé suivant revendication 1 ou 2, caractérisé en ce que les vapeurs de $ZrCl_4$ appauvries ou enrichies en $HfCl_4$ sont entraînées à travers le mélange de sels fondus au moyen d'un courant d'un gaz neutre tel que de l'azote.

4°/ - Procédé suivant l'une des revendications 1 à 3, caractérisé en ce que le chlorure alcalin est ajouté à l'état solide.

5°/ - Procédé suivant l'une des revendications 1 à 4, caractérisé en ce que les vapeurs de $ZrCl_4$ appauvries en $HfCl_4$ contenant du chlorure d'aluminium sont extraites du mélange de sels obtenus à la base de la colonne de distillation.

6°/ - Procédé suivant l'une des revendications 1 à 4, caractérisé en ce que les vapeurs de $ZrCl_4$ enrichies en $HfCl_4$ contenant du chlorure d'aluminium proviennent du sommet de la colonne de distillation.

7°/ - Dispositif permettant de séparer le chlorure d'aluminium contenu dans un $ZrCl_4$ appauvri en $HfCl_4$ ou dans un $ZrCl_4$ enrichi en $HfCl_4$ provenant d'une installation de séparation en continu de $ZrCl_4$

0123634

-14-

d'avec $HfCl_4$ par distillation extractive, utilisant comme solvant sélectif un chloroaluminate alcalin, caractérisé en ce qu'il est constitué d'une colonne de séparation (17) à l'intérieur de laquelle plusieurs plateaux (18, 19, 20) sont disposés, qui supportent chacun une couche d'un mélange de sels fondus, la colonne (17) étant pourvue à sa base d'un orifice (30) d'introduction d'un courant de $ZrCl_4$ gazeux appauvri ou enrichi en $HfCl_4$, chaque plateau étant équipé de moyens de barbotage permettant de faire passer le $ZrCl_4$ à travers le mélange de sels fondus (27, 28, 29) en direction de la base de la colonne, et en ce que, à la partie supérieure de la colonne, un moyen d'introduction (32) permet d'introduire en quantités déterminées un chlorure alcalin tandis qu'un orifice de sortie (31) du $ZrCl_4$ purifié en aluminium est relié à des moyens de condensation (9) et stockage de ce $ZrCl_4$.

8°/ - Dispositif suivant revendication 7, caractérisé en ce qu'il comporte deux à huit plateaux.

0123634

1-2

FIG.1

2·2

FIG.2

Office européen
des brevets

**RAPPORT DE RECHERCHE EUROPEENNE**

EP  84 42 0056

| Catégorie | Citation du document avec indication, en cas de besoin, des parties pertinentes | Revendication concernée | CLASSEMENT DE LA DEMANDE (Int. Cl. ³) |
|-----------|------------------------------------------------------------------|------------|------------------|
| **DOCUMENTS CONSIDERES COMME PERTINENTS** | | | |
| Y | US-A-2 744 060 (R.B. EATON) <br> * Revendications; colonne 2 * | 1-8 | C 01 G 25/04 |
| Y | FR-A-1 222 447 (NATIONAL DISTILLERS AND CHEMICAL CORP.) <br> * Résumé; pages 2,3 * | 1-8 | |
| A,D | FR-A-2 250 707 (UGINE ACIERS) | | |
| A,D | EP-A-0 045 270 (ISHIZUKA, HIROSHI) | | |
| A | FR-A-2 028 154 (ISHIZUKA, HIROSHI) | | |
| A | US-A-2 916 362 (R.V. HORRIGAN) | | DOMAINES TECHNIQUES RECHERCHES (Int. Cl. ³) |
| A | US-A-3 053 620 (H. GREENBERG) | | C 01 G |
| A | US-A-3 098 722 (E.C. CARLSON) | | |

Le présent rapport de recherche a été établi pour toutes les revendications

| Lieu de la recherche | Date d'achèvement de la recherche | Examinateur |
|----------------------|-----------------------------------|-------------|
| LA HAYE | 09-07-1984 | JACOBS J.J.E.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82